# EUROPEAN PATENT SPECIFICATION

(11) **EP 2 112 042 B1**
(45) Date of publication and mention of the grant of the patent: **08.07.2015**
(21) Application number: 08155165.7
(22) Date of filing: 25.04.2008
(51) Int. Cl.: B60T 8/1755

(54) **Yaw stability control system capable of returning the vehicle to a pre body-force-disturbance heading**
Seitenstabilitätskontrollsystem, um das Fahrzeugs in eine Richtung vor einer Karosseriekraftstörung zurück zu bringen
Système de contrôle de stabilité de lacet capable de ramener le véhicule à un cap précédent de perturbation de force

(43) Date of publication of application: 28.10.2009
(73) Proprietor: Ford Global Technologies, LLC, Dearborn, MI 48126 (US)
(72) Inventor: Jacobson, Bengt, 435 38 Mölnlycke (SE); Lu, Jianbo, Livonia, MI 48150 (US); Xu, Li, Novi, MI 48377 (US); Thor, Mikael, 416 52 Göteborg (SE)
(74) Representative: Valea AB

(56) References cited:
- EP-A- 1 595 768
- WO-A-2006/106009
- WO-A-2007/044744
- DE-A1-102004 033 900
- DE-A1-102006 034 516

## Description

### TECHNICAL FIELD

The present invention is related to a yaw stability control system in accordance with the preamble of claim 1. Furthermore, the present invention relates to a method of controlling a yaw stability control system for a vehicle in accordance with the preamble of claim 10.

### BACKGROUND OF THE INVENTION

Several vehicle control systems, which are used to augment the driving capability of a vehicle operator, currently exist. Those control systems include anti-brake-lock system (ABS), traction control system (TCS), and stability controls. Example stability control systems are electronic stability control (ESC) systems or sometimes referred to as yaw stability control (YSC) systems. Systems of this kind are also sometimes called ESP (Electronic Stability Program) systems or DSTC (Dynamic Stability Traction Control) systems.

The stability control systems are utilized to maintain controlled and stable vehicle operations for improved vehicle and occupant safety. The stability control systems are often used to maintain control of a vehicle following a driver's desired travel direction, to prevent the vehicle from spinning out, and/or plough out, and/or to prevent or mitigate a roll over event.

More specifically, the above yaw stability control systems typically compare the driver's desired direction of a vehicle based upon the steering wheel angle and the path of travel, which is determined from motion sensors located on the vehicle. By regulating the amount of braking at each corner of the vehicle and the traction force of the vehicle and steering, the desired path of travel may be maintained.

Existing stability control systems are designed to correct undesired vehicle motion caused by a tire-force-disturbance, such as a tire-force-differential due to a road surface disturbance or due to a mismatch between the driving intention of a driver and a road surface condition. This mismatch usually happens when there is a significant difference between the front and the rear tire lateral forces applied to the vehicle (referred to as the lateral tire-force-differential), or there is a significant difference between the right and the left tire longitudinal tire-forces (referred to as the longitudinal tire-force-differential), or a combination thereof. Such a tire-force-differential is called a tire-force-disturbance (TFD).

The existing yaw stability control systems are effective in controlling the undesired vehicle motions due to the aforementioned tire-force-disturbance. The yaw stability control systems activate brakes, reduce engine torque, or vary the driving torque at individual wheels or axles so as to generate an active tire-force-differential to counteract the effect of the tire-force-disturbance. That is, the control mechanism and the vehicle disturbance are from the same source: the tire-force variations or the tire-force-differentials.

An undesired yaw motion may also be generated by a yaw-moment-disturbance caused when a vehicle receives a force-disturbance other than a tire-force-disturbance. An example of which is an external force-disturbance that is applied to the vehicle body, which is called a body-force-disturbance (BFD). A body-force-disturbance may occur when a vehicle hits a fixed object, such as a tree, or when the vehicle is hit by another moving object, such as a vehicle. A body-force-disturbance may also occur when the vehicle experiences a sudden strong wind gust applied to the vehicle body.

While the magnitude of the tire-force-disturbance is limited by the driving condition of the road surface, the magnitude of a body-force-disturbance can be much higher. For example, the collision of two moving vehicles may generate a body-force-disturbance with a magnitude that is several factors larger than the total tire-forces. In a light collision, the magnitude of the body-force-disturbance might be very close to the total tire-force. The body-force-disturbance is different from the tire-force-disturbance generated from the tire-force-differentials. A vehicle experiencing a body-force-disturbance may have balanced tire-forces (i.e., there are no significant tire-force-differentials among the 4 tires) and may have larger than normal vehicle motion such as yaw motion.

A yaw motion may be generated when a vehicle receives a body-force-disturbance from an external source. Since the tire-forces may be well balanced before and after receiving the body-force-disturbance (i.e., there are no significant tire-force-differentials among the 4 tires), the existing stability control is ineffective, since it is designed to handle vehicle yaw motion due to a tire-force-disturbance generated from tire differentials.

Also, current stability control systems are designed to aid a vehicle driver in pursuing a driver intended action or course. This can result in increased destabilization and/or a collision when a vehicle driver panics, as a result of the impending or actual application of a body-force-disturbance. During a body-force-disturbance event, a driver may panic and perform driving tasks that are inappropriate or drastic in an attempt to avoid receiving the external body-force-disturbance which can lead to further undesirable events. Additional events can occur due to the abnormal path of the vehicle and the large path deviation.

According to recent studies about one third of all vehicle-to-vehicle accidents that cause severe injuries involve more than one impact. It is also shown that if the first impact is relatively light it is very often followed by a severe second impact. This second impact can include one or many of a large variety of impact types, e.g. vehicle-to-vehicle collisions, vehicle-to-object collisions, tripped or untripped roll-overs and road departures.

The yaw stability control systems that exist in today's production vehicles are designed to provide stabilization assistance for the driver during normal road conditions, i.e. when the vehicle's acceleration is limited by the road friction. The efficiency of yaw stability control systems after involved vehicles receive a body-force-disturbance from light collision impacts depends heavily on how the driver reacts after the body-force-disturbance. One problem with the current yaw stability control systems is that they provide assistance depending on the driver's reaction.

Many first impacts destabilize the vehicle, e.g. by a lateral hit in the rear of the vehicle. In such cases, the vehicle changes travel direction during the short time period of impact due to a resulting large magnitude of vehicle yaw rate, and the driver then has to correct very quickly if he should avoid leaving the lane / intended path. Prior art yaw rate stability controllers usually perform brake intervention as a function of yaw rate error, where the yaw rate error is determined as the difference between a yaw rate target determined based on the driver's intended steering and a sensed yaw rate measurement from a yaw rate sensor, and will hence not intervene after the vehicle has stabilized, since there is no large yaw rate error even if there is a large yaw angle (heading angle) error.

Document WO2007/044744A2 discloses control systems which upon detection of a body force disturbance may operate in an enhanced or modified operating mode. In the enhanced/modified operating mode vehicle control by a driver is reduced and the control system generates control command based on measured motion information to mitigate the undesired yaw motion.

### SUMMARY OF THE INVENTION

An object of the present invention is to provide an improved yaw stability control system for a vehicle which is able to return the vehicle to a pre body-force-disturbance heading, or at least a heading close thereto, following a vehicle heading altering body-force-disturbance.

According to a first aspect of the present invention this object is achieved in accordance with claim 1, which specifies a yaw stability control system for a vehicle comprising: at least one body-force-disturbance detection unit; and at least one yaw rate sensor arranged to generate a signal indicative of the vehicle yaw rate; and a controller responsive to a yaw rate error and arranged to provide an input to a system for performing vehicle yaw stability control operations, the controller, in response to a detected body-force-disturbance further being arranged to: activate a yaw angle control part of the controller to start performing control of the yaw angle error in order to obtain a correction of the vehicle yaw angle resulting from the body-force-disturbance; and input to the system for performing vehicle yaw stability control operations a signal to perform a body-force-disturbance yaw stability control operation for eliminating the vehicle yaw angle resulting from the body-force-disturbance and returning the vehicle to a pre body-force-disturbance heading.

A further object of the present invention is to provide an improved method of controlling a yaw stability control system for a vehicle, through which method the yaw stability control system is able to return the vehicle to a pre body-force-disturbance heading, or at least a heading close thereto, following a vehicle heading altering body-force-disturbance.

According to a second aspect of the present invention this object is achieved in accordance with claim 10, which specifies a method of controlling a yaw stability control system for a vehicle comprising: at least one body-force-disturbance detection unit; and at least one yaw rate sensor arranged to generate a signal indicative of the vehicle yaw rate; and a controller responsive to a yaw rate error and arranged to provide an input to a system for performing vehicle yaw stability control operations, which method comprises the steps of: arranging the controller to: activate a yaw angle control part of the controller, in response to a detected body-force-disturbance, to start performing control of the yaw angle error in order to obtain a correction of the vehicle yaw angle resulting from the body-force-disturbance; and input to the system for performing vehicle yaw stability control operations a signal to perform body-force-disturbance yaw stability control operations for eliminating the vehicle yaw angle resulting from the body-force-disturbance and returning the vehicle to a pre body-force-disturbance heading.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 illustrates the concept of adding a body-force-disturbance triggered yaw angle control part to the current stability control algorithm according to the present invention.
Figure 2 illustrates the difference in brake pressure for different interventions of a vehicle having a prior art yaw stability control system and a vehicle having a yaw stability control system in accordance with the present invention.
Figure 3 illustrates a comparison of the trajectories after receiving a body-force-disturbance for a vehicle having a prior art yaw stability control system and a vehicle having a yaw stability control system in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The present invention is preferably used in conjunction with an existing yaw stability control system onto which the functionality of returning a vehicle to its heading prior to being subjected to a body-force-disturbance is desired for a vehicle.

This invention is based on the realization that it would be advantageous if the operation range of the stability control is extended to the range of vehicle dynamics which involves the application of a body-force-disturbance, e.g. a light vehicle-to-vehicle impact. That is, the stability control continues activating the brake controls and providing additional brake controls such that the excessive degree of vehicle dynamics during the post body-force-disturbance period is mitigated. In conclusion herewith is proposed a way to keep the stability control activated during a body-force-disturbance event such that it is possible to eliminate a vehicle yaw angle resulting from a body-force-disturbance and return the vehicle to a desired heading which may be the pre body-force-disturbance yaw angle, i.e. heading.

This is also one way to reduce the number of secondary impacts, i.e. to further assist the driver in controlling the vehicle after a first impact. This added assistance could possibly lead to a complete avoidance, or at least mitigation, of a secondary impact.

In contrast to the yaw stability control system for a vehicle in accordance with the present invention prior art yaw rate stability controllers, which usually perform brake intervention as a function of yaw rate error, do not intervene when the vehicle is stabilized, since there is no large yaw rate error, even though there may be a large heading angle error.

In accordance with the present invention, as a solution to the problem, it is proposed to add a body-force-disturbance triggered yaw angle control part 1 to a common prior art stability control algorithm. The inclusion of such a body-force-disturbance triggered yaw angle control part 1 to the common prior art stability control algorithm means that the algorithm will include direct heading angle control in body-force-disturbance situations. Thus, the present invention is based on the inclusion of a body-force-disturbance detection triggered yaw angle control part 1 to the prior art yaw rate controller, which typically for prior art yaw rate controllers only have yaw rate proportional 2 and yaw rate derivative 3 parts today.

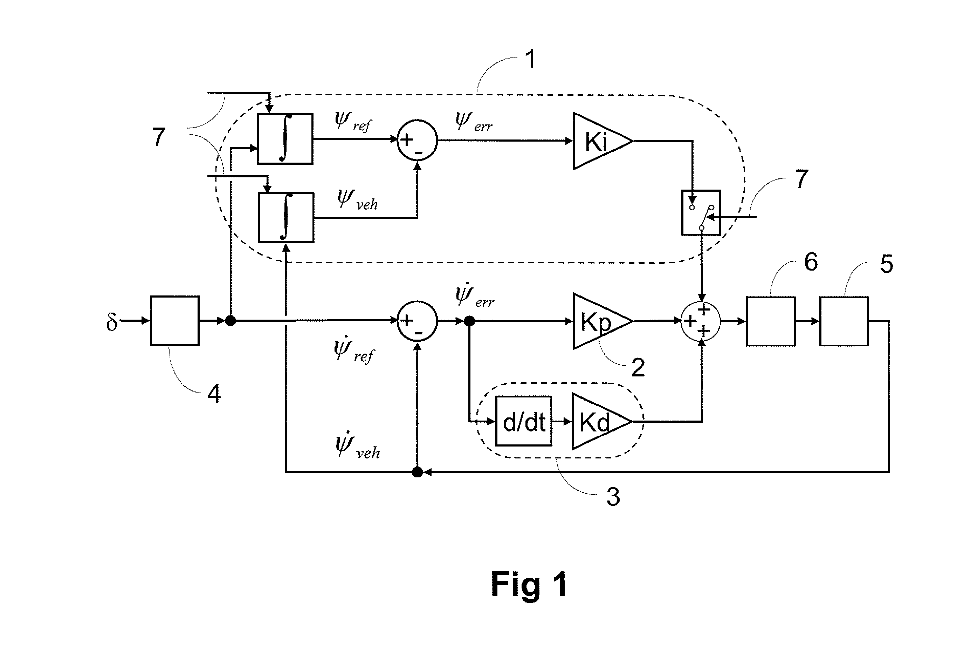

In a preferred first embodiment of the present invention, as shown schematically in figure 1, the concept of adding a body-force-disturbance triggered yaw angle control part 1 to the current stability control algorithm is illustrated.

Figure 1 illustrates a yaw rate controller responsive to a yaw rate error, here shown as having a yaw rate proportional 2 and a yaw rate derivative part 3. In the controller the yaw rate error *ψ̇ₑᵣᵣ*, based on which brake intervention is performed, is determined as the difference between a yaw rate target *ψ̇_{ref}*, provided from a yaw rate reference model 4 to which the steering wheel angle δ is input, and a sensed yaw rate *ψ̇ᵥₑₕ*, provided by vehicle dynamic sensors 5. This yaw rate error *ψ̇ₑᵣᵣ* is subjected to the yaw rate proportional 2 and yaw rate derivative 3 parts of the controller and summed as an input to the brake actuators 6. This input may be seen as carrying a yaw torque request.

In accordance with the present invention a body-force-disturbance triggered yaw angle part 1 of the controller is provided in addition to the yaw rate proportional 2 and yaw rate derivative 3 parts of the controller. Triggered by a determination of the vehicle being subjected to a body-force-disturbance 7, the yaw angle control part 1 is reset and activated to start performing an integration of the yaw rate, from degrees/second to degrees, as the difference between an integration of the sensed yaw rate *ψ̇ᵥₑₕ* and an integration of the yaw rate target *ψ̇_{ref}*. This difference represents a yaw angle error *ψₑᵣᵣ* which is scaled suitably and input to the brake actuators 6, thus providing to the brake actuators 6 the change in heading angle, i.e. yaw angle error, resulting from the body-force-disturbance.

Body-force-disturbance detection sensors 7 are used to detect a body-force-disturbance when the vehicle is hit by a moving object, such as another vehicle, or hits a stationary or fixed object. The body-force-disturbance detection sensors 7 may also be located anywhere on the vehicle and generate body-force-disturbance detection signals in response to a body-force-disturbance. The body-force-disturbance detection sensors 7 may include sensors that are used as vehicle status sensors, such as the yaw rate sensor, the lateral acceleration sensor, and the longitudinal acceleration sensor. The body-force-disturbance detection sensors 7 may also be in the form of an accelerometer, rate gyros, a piezo electric sensor, a piezo resistive sensor, a pressure sensor, a contact sensor, a strain gage, crash sensors, close environment sensors or may be in some other form known in the art.

In order to handle yaw rates reaching very high values during a very short period of time as a consequence of an impact integration may be performed in a processor, not shown, e.g. the same processor as to which the sensors are connected. It may utilize both the yaw rate sensor 5, normally used for yaw stability control, and body force disturbance sensors 7, i.e. sensors used for crash sensing. The yaw angle signal may then be communicated to a stability control processor (not shown), which normally will be arranged in the brake controller module 6.

A body-force-disturbance sensor 7 may be configured to differentiate between "light" and "severe" body-force-disturbances. Hereby, in an alternative embodiment the driver steering wheel angle *δ* may be input to the reference model in response to detection of a "light" body-force-disturbance while a driver steering wheel angle from prior to the body-force-disturbance may be input to the yaw rate reference model 4 in response to detection of a "severe" body-force-disturbance. In this way any effects of driver's panic steering during a "severe" body-force-disturbance event may be suppressed.

It is assumed that the vehicle is equipped with a conventional brake control system that includes a brake controller 6 that is used to actuate vehicle brakes that are associated with the wheels of the vehicle. The brakes are independently actuatable through the brake controller 6. The brake controller 6 may control a hydraulic system of the vehicle or electrically actuatable brakes. Today, some yaw stability control systems also use steering as an additional actuator. The yaw stability control system described herein may also be used with steering as an additional actuator.

Closed loop control of yaw angle error, using a yaw angle reference which is the integration of a yaw rate reference, from degrees/second to degrees, during the body-force-disturbance event is the key to have the vehicle striving to return to a pre-body-force-disturbance course. It has proven very effective in simulations, and fairly easy to implement as the basic functionalities of the prior art yaw stability control systems can be maintained.

This solution is to be considered as an estimation of driver's intention. This is done in terms of integrating the driver's intention from immediately before receiving the body-force-disturbance, e.g. during a time period a few seconds before an impact, to shortly after the impact, e.g. a few seconds after the impact. Thus the changes from normal yaw stability functionality are securely time limited to these e.g. few seconds after the body-force-disturbance event. The influence of the yaw angle control part 1 should suitably be arranged to fade out towards the end of the time period, in order to gradually return full control to a driver of the vehicle.

The end of the time period could be determined through having time periods of a predetermined length or alternatively the end of the time period could be set to be adetermined in relation to the side slip angle *β* of the vehicle, e.g. such that the time period is associated to the part of a body-force-disturbance event when the side slip angle *β* is to large to enable braking intervention producing useful stabilizing tire-to-road forces. This could e.g. be determined as a time period ending as the side slip angle *β* of the vehicle falls below 40 degrees.

As mentioned above, in order to assure that one includes the first part of the body-force-disturbance event, integration will have to be started shortly before impact. Preferably integration should be started 0.1 - 1 second before impact. In order to achieve this, window integrals may be used by which the yaw rate error is integrated over defined time windows surrounding the impact instance.

Thus, the present invention may be realized as a yaw stability control system for a vehicle comprising: at least one body-force-disturbance detection unit 7; and at least one yaw rate sensor 5 arranged to generate a signal indicative of the vehicle yaw rate *ψ̇ᵥₑₕ*; and a controller responsive to a yaw rate error *ψ̇ₑᵣᵣ* determined as the difference between a yaw rate target ψ̂*_{ref}* and the sensed yaw rate ψ̂*ᵥₑₕ* the controller e.g. as shown having a yaw rate proportional 2 and a yaw rate derivative 3 part arranged to be summed as an input to a system 6 for performing vehicle yaw stability control operations, the controller, in response to a detected body-force-disturbance being arranged to: activate a yaw angle control part 1 of the controller, that e.g. as shown may be arranged in parallel to the yaw rate proportional 2 and yaw rate derivative 3 parts of the controller, to start performing a closed loop control of the yaw angle error in order to obtain a correction of the vehicle yaw angle resulting from the body-force-disturbance; and input to the system 6 for performing vehicle yaw stability control operations a signal to perform a body-force-disturbance yaw stability control operation for eliminating the vehicle yaw angle resulting from the body-force-disturbance and returning the vehicle to a desired heading, which may be the pre body-force-disturbance heading.

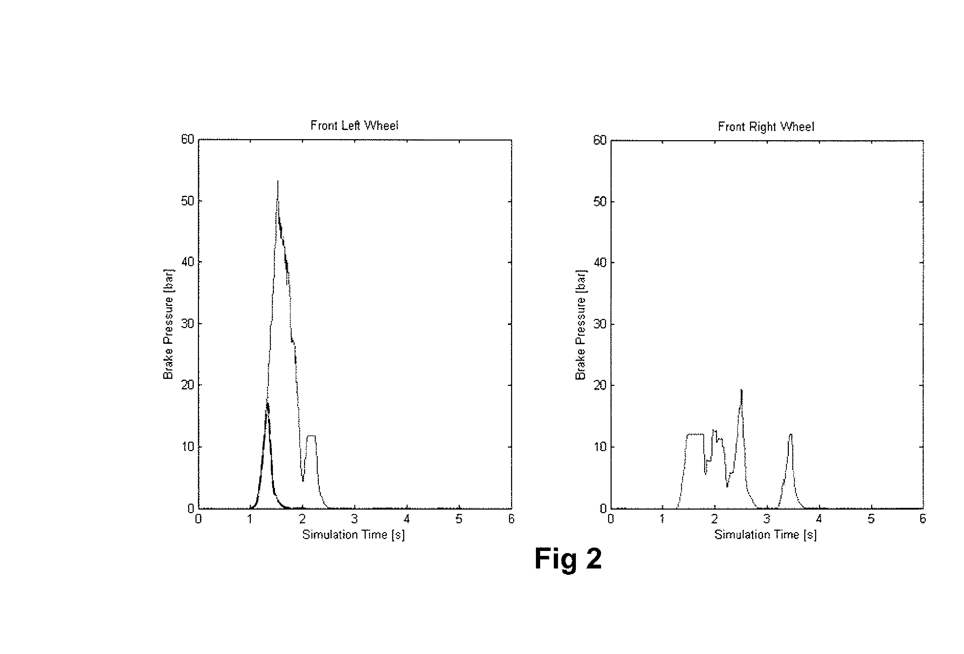

A simple implementation of the proposed solution for post impact heading angle correction has been implemented and verified in a simulation environment. The simulation results show a substantial increase in the level of assistance which the system provides for the passive driver model. This added assistance is noticed in Figure 2, where the difference in brake pressure for the different interventions is depicted.

In the intervention brake pressure comparison of figure 2 the dashed line represents a vehicle equipped with standard yaw stability control while the solid line represents a vehicle equipped with post impact heading angle correction in accordance with the present invention in addition to the standard yaw stability control. The vehicle's velocity before the impact is 150 km/h and the steering wheel angle *δ* is fixed to zero, simulating a passive driver, during the entire simulation.

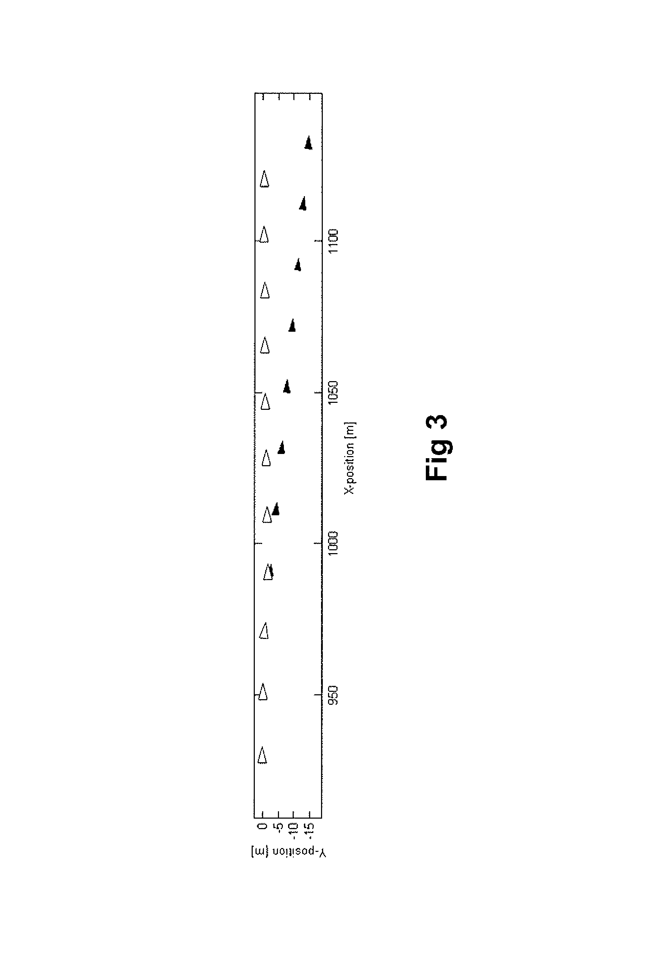

The benefit of post impact heading angle correction can also be visualized by comparing the vehicle's trajectory after the impact. Figure 3 depicts these trajectories in a simulation case where the vehicle is hit from the side in the right rear corner. The black vehicle is equipped with standard yaw stability control while the white vehicle is equipped with post impact heading angle correction in accordance with the present invention in addition to the standard yaw stability control. The vehicle's velocity before the impact is 150 km/h and the steering wheel angle *δ* is fixed to zero, simulating a passive driver, during the entire simulation.

In accordance with the present invention is also envisaged an automotive vehicle, which comprises a yaw stability control system as described above.

Furthermore, in accordance with the present invention is also envisaged a method of controlling a yaw stability control system for a vehicle. In accordance with the present invention the method comprises: at least one body-force-disturbance detection unit 7; and at least one yaw rate sensor 5 arranged to generate a signal ψ̂*ᵥₑₕ* indicative of the vehicle yaw rate; and a controller responsive to a yaw rate error determined as the difference between a yaw rate target ψ̂*_{ref}* and the sensed yaw rate ψ̂*ᵥₑₕ* the controller, e.g. as shown having a yaw rate proportional 2 and a yaw rate derivative 3 part arranged to be summed and provided as an input to a system for performing vehicle yaw stability control operations 6, which method further comprises the steps of: arranging the controller to: activate a yaw angle control part 1 of the controller, that e.g. as shown may be arranged in parallel to the yaw rate proportional 2 and yaw rate derivative parts 3 of the controller, in response to a detected body-force-disturbance, to start performing control of the yaw angle error in order to obtain a correction of the vehicle yaw angle resulting from the body-force-disturbance; and input to the system for performing vehicle yaw stability control operations 6 a signal to perform body-force-disturbance yaw stability control operations for eliminating the vehicle yaw angle resulting from the body-force-disturbance and returning the vehicle to a pre body-force-disturbance heading.

Modifications to embodiments of the invention described in the foregoing are possible without departing from the scope of the invention as defined by the accompanying claims.

## Claims

1. A yaw stability control system for a vehicle comprising: at least one body-force-disturbance detection unit (7); and at least one yaw rate sensor (5) arranged to generate a signal (*ψ̇ᵥₑₕ*) indicative of the vehicle yaw rate; and a controller responsive to a yaw rate error and arranged to provide an input to a system for performing vehicle yaw stability control operations (6), **characterized in that** the controller, in response to a detected body-force-disturbance further is arranged to:
activate a yaw angle control part (1) of the controller to start performing control of the yaw angle error (*ψₑᵣᵣ*) through performing an integration of the yaw rate, from degrees/second to degrees, where the yaw angle error (*ψₑᵣᵣ*) is obtained as the difference between an integration of a sensed yaw rate (*ψ̇ᵥₑₕ*) and an integration of a yaw rate target (*ψ̇_{ref}*) provided from a yaw rate reference model (4) to which a steering wheel angle(*δ*) is input, in order to obtain a correction of the vehicle yaw angle resulting from the body-force-disturbance; and
input to the system for performing vehicle yaw stability control operations (6) a signal to perform a body-force-disturbance yaw stability control operation for eliminating the vehicle yaw angle resulting from the body-force-disturbance and returning the vehicle to a pre body-force-disturbance heading.

2. A yaw stability control system according to claim 1, **characterized in that** the controller is arranged to start integration of said yaw rates shortly before detection of the body-force-disturbance.

3. A yaw stability control system according to claim 2, **characterized in that** the controller is arranged to start integration of said yaw rates 0.1 - 1 second before detection of the body-force-disturbance.

4. A yaw stability control system according to claim 3, **characterized in that** the controller is arranged to perform integration of said yaw rates during a predetermined time period surrounding the body-force-disturbance instance.

5. A yaw stability control system according to claim 4, **characterized in that** the controller is arranged to perform integration of said yaw rates during a predetermined time period surrounding the body-force-disturbance instance using window integrals by which the yaw rates are integrated over defined time windows.

6. A yaw stability control system according to any one of claims 1 to 5, **characterized in that** the controller is arranged such that the influence of the yaw angle control part will fade out towards the end of the predetermined time period in order to gradually return full control to a driver of said vehicle.

7. A yaw stability control system according to any one of claims 1 to 6, **characterized in that** the controller is arranged to input to the system for performing vehicle yaw stability control operations (6) a signal to perform body-force-disturbance yaw stability control operations for eliminating the vehicle yaw angle resulting from the body-force-disturbance and returning the vehicle to a pre body-force-disturbance heading through performing braking intervention.

8. A yaw stability control system according to any one of the preceding claims, **characterized in that** the controller is arranged to end the predetermined time period and yaw angle control as a side slip angle (*β*) of the vehicle falls below 40 degrees.

9. An automotive vehicle **characterized in that** it comprises a yaw stability control system according to any one of the preceding claims.

10. A method of controlling a yaw stability control system for a vehicle comprising: at least one body-force-disturbance detection unit (7); and at least one yaw rate sensor (5) arranged to generate a signal (*ψ̇ᵥₑₕ*) indicative of the vehicle yaw rate; and a controller responsive to a yaw rate error and arranged to provide an input to a system for performing vehicle yaw stability control operations (6), **characterized in that** it comprises the steps of: arranging the controller to: activate a yaw angle control part (1) of the controller, in response to a detected body-force-disturbance, to start performing control of the yaw angle error (*ψₑᵣᵣ*) through performing an integration of the yaw rate, from degrees/second to degrees, where the yaw angle error (*ψₑᵣᵣ*) is obtained as the difference between an integration of a sensed yaw rate (*ψ̇ᵥₑₕ*) and an integration of a yaw rate target (*ψ̇_{ref}*) provided from a yaw rate reference model (4) to which a steering wheel angle(*δ*) is input, in order to obtain a correction of the vehicle yaw angle resulting from the body-force-disturbance; and
input to the system for performing vehicle yaw stability control operations (6) a signal to perform body-force-disturbance yaw stability control operations for eliminating the vehicle yaw angle resulting from the body-force-disturbance and returning the vehicle to a pre body-force-disturbance heading.

## Patentansprüche

1. Gierstabilitätssteuersystem für ein Fahrzeug, das umfasst: mindestens eine Karosseriekraftstörungs-Detektionseinheit (7); und mindestens einen Gierratensensor (5), der ausgelegt ist, ein Signal (*ψ̇ᵥₑₕ*) zu erzeugen, das die Fahrzeuggierrate angibt, und eine Steuereinheit, die auf einen Gierratenfehler reagiert und ausgelegt ist, eine Eingabe an ein System zum Ausführen von Fahrzeuggierstabilitäts-Steuervorgängen (6) zu liefern, **dadurch gekennzeichnet, dass** die Steuereinheit als Reaktion auf eine detektierte Karosseriekraftstörung ferner ausgelegt ist: einen Gierwinkelsteuerteil (1) der Steuereinheit zu aktivieren, um das Ausführen einer Steuerung des Gierwinkelfehlers (*ψₑᵣᵣ*) durch das Ausführen einer Integration der Gierrate von Grad/Sekunden zu Grad zu starten, wobei der Gierwinkelfehler (*ψₑᵣᵣ*) als der Unterschied zwischen einer Integration einer erfassten Gierrate (*ψ̇ᵥₑₕ*) und einer Integration eines Gierratenziels (*ψ̇_{ref}*), das von einem Gierratenreferenzmodell (4), in das ein Steuerradwinkel (δ) eingegeben wird, geliefert wird, erhalten wird, um eine Korrektur des Fahrzeuggierwinkels, der sich aus der Karosseriekraftstörung ergibt, zu erhalten; und
ein Signal in das System zum Ausführen von Fahrzeuggierstabilitätssteuervorgängen (6) einzugeben, um einen Karosseriekraftstörungsgierstablitäts-Steuervorgang zum Beseitigen des Fahrzeugierwinkels, der sich aus der Karosseriekraftstörung ergibt, und Zurückführen des Fahrzeugs zu einem Kurs vor der Karosseriekraftstörung auszuführen.

2. Gierstabilitätssteuersystem nach Anspruch 1, **dadurch gekennzeichnet, dass** die Steuereinheit ausgelegt ist, die Integration der Gierraten kurz vor der Detektion der Karosseriekraftstörung zu starten.

3. Gierstabilitätssteuersystem nach Anspruch 2, **dadurch gekennzeichnet, dass** die Steuereinheit ausgelegt ist, die Integration der Gierraten 0,1-1 Sekunde vor der Detektion der Karosseriekraftstörung zu starten.

4. Gierstabilitätssteuersystem nach Anspruch 3, **dadurch gekennzeichnet, dass** die Steuereinheit ausgelegt ist, die Integration der Gierraten während einer vorgegebenen Zeitdauer, die den Karosseriekraftstörungsmoment umgibt, auszuführen.

5. Gierstabilitätssteuersystem nach Anspruch 4, **dadurch gekennzeichnet, dass** die Steuereinheit ausgelegt ist, die Integration der Gierraten während einer vorgegebenen Zeitdauer, die den Karosseriekraftstörungsmoment umgibt, unter Verwendung von Fensterintegralen, durch die die Gierraten über definierte Zeitfenster integriert werden, zu starten.

6. Gierstabilitätssteuersystem nach einem der Ansprüche 1 bis 5, **dadurch gekennzeichnet, dass** die Steuereinheit derart ausgelegt ist, dass der Einfluss des Gierwinkelsteuerteils zum Ende der vorgegebenen Zeitdauer hin abnehmen wird, um allmählich die ganze Steuerung an einen Fahrer des Fahrzeugs zurückzugeben.

7. Gierstabilitätssteuersystem nach einem der Ansprüche 1 bis 6, **dadurch gekennzeichnet, dass** die Steuereinheit ausgelegt ist, ein Signal in das System zum Ausführen von Fahrzeuggierstabilitätssteuervorgängen (6) einzugeben, um Karosseriekraftstörungsgierstabilitäts-Steuervorgänge zum Beseitigen des Fahrzeuggierwinkels, der sich aus der Karosseriekraftstörung ergibt, und zum Zurückkehren des Fahrzeugs zu einem Kurs vor der Karosseriekraftstörung durch Ausführen eines Bremseingriffs auszuführen.

8. Gierstabilitätssteuersystem nach einem der vorhergehenden Ansprüche, **dadurch gekennzeichnet, dass** die Steuereinheit ausgelegt ist, die vorgegebene Zeitdauer und die Gierwinkelsteuerung zu beenden, wenn ein Schleuderwinkel (β) des Fahrzeugs unter 40 Grad fällt.

9. Selbstbewegendes Fahrzeug, **dadurch gekennzeichnet, dass** es ein Gierstabilitätssteuersystem nach einem der vorhergehenden Ansprüche umfasst.

10. Verfahren zum Steuern eines Gierstabilitätssteuersystems für ein Fahrzeug, das umfasst: mindestens eine Karosseriekraftstörungs-Detektionseinheit (7); und mindestens einen Gierratensensor (5), der ausgelegt ist, ein Signal (*ψ̇ᵥₑₕ*) zu erzeugen, das die Fahrzeuggierrate angibt; und eine Steuereinheit, die auf einen Gierratenfehler reagiert und ausgelegt ist, eine Eingabe an ein System zum Ausführen von Fahrzeuggierstabilitätssteuervorgängen (6) zu liefern, **dadurch gekennzeichnet, dass** es die folgenden Schritte umfasst: Auslegen der Steuereinheit, um als Reaktion auf eine detektierte Karosseriekraftstörung einen Gierwinkelsteuerteil (1) der Steuereinheit zu aktivieren, die Ausführung einer Steuerung des Gierwinkelfehlers (*ψₑᵣᵣ*) durch Ausführen einer Integration der Gierrate von Grad/Sekunden zu Grad zu starten, wobei der Gierwinkelfehler (*ψₑᵣᵣ*) als der Unterschied zwischen einer Integration einer erfassten Gierrate (*ψ̇ᵥₑₕ*) und einer Integration eines Gierratenziels (*ψ̇_{ref}*), das von einem Gierratenreferenzmodell (4), in das ein Steuerradwinkel (δ) eingegeben wird, geliefert wird, um eine Korrektur des Fahrzeuggierwinkels, der sich aus der Karosseriekraftstörung ergibt, zu erhalten; und
ein Signal in das System zum Ausführen von Fahrzeuggierstabilitätssteuervorgängen (6) einzugeben, um Karosseriekraftstörungsgierstablitäts-Steuervorgänge zum Beseitigen des Fahrzeugierwinkels, der sich aus der Karosseriekraftstörung ergibt, und Zurückführen des Fahrzeugs zu einem Kurs vor der Karosseriekraftstörung auszuführen.

## Revendications

1. Système de commande de stabilité en lacet pour véhicule comprenant : au moins une unité de détection de perturbation de force de carrosserie (7) ; et au moins un capteur d'amplitude du mouvement de lacet (5) agencé pour générer un signal (*ψ̇ᵥₑₕ*) représentant l'amplitude du mouvement de lacet du véhicule ; et un contrôleur réagissant à une erreur d'amplitude du mouvement de lacet et agencé pour fournir une entrée à un système pour réaliser des opérations de commande de stabilité en lacet du véhicule (6), **caractérisé en ce que** le contrôleur, en réponse à une perturbation de force de carrosserie détectée est agencé en outre pour :
activer une partie de commande d'angle de lacet (1) du contrôleur pour démarrer la réalisation de la commande de l'erreur d'angle de lacet (*ψₑᵣᵣ*) en réalisant une intégration de l'amplitude du mouvement de lacet, de degrés/seconde en degrés, où l'erreur d'angle de lacet (*ψₑᵣᵣ*) est obtenue en tant que différence entre une intégration d'une amplitude du mouvement de lacet mesurée (*ψ̇ᵥₑₕ*) et une intégration d'une amplitude du mouvement de lacet ciblée (*ψ̇_{ref}*) fournie à partir d'un modèle de référence d'amplitude du mouvement de lacet (4) dans lequel on entre un angle de volant de direction (*δ*), afin d'obtenir une correction de l'angle de lacet du véhicule résultant de la perturbation de force de carrosserie ; et
introduire dans le système, pour réaliser des opérations de commande de stabilité en lacet du véhicule (6), un signal pour réaliser une opération de commande de stabilité en lacet de perturbation de force de carrosserie pour éliminer l'angle de lacet du véhicule résultant de la perturbation de force de carrosserie et ramener le véhicule à un cap précédant la perturbation de force de carrosserie.

2. Système de commande de stabilité en lacet selon la revendication 1, **caractérisé en ce que** le contrôleur est agencé pour lancer l'intégration desdites amplitudes de mouvement de lacet peu de temps avant la détection de la perturbation de force de carrosserie.

3. Système de commande de stabilité en lacet selon la revendication 2, **caractérisé en ce que** le contrôleur est agencé pour lancer l'intégration desdites amplitudes de mouvement de lacet de 0,1 à 1 seconde avant la détection de la perturbation de force de carrosserie.

4. Système de commande de stabilité en lacet selon la revendication 3, **caractérisé en ce que** le contrôleur est agencé pour réaliser l'intégration desdites amplitudes de mouvement de lacet au cours d'un intervalle de temps prédéterminé qui entoure l'occurrence de la perturbation de force de carrosserie.

5. Système de commande de stabilité en lacet selon la revendication 4, **caractérisé en ce que** le contrôleur est agencé pour réaliser l'intégration desdites amplitudes de mouvement de lacet au cours d'un intervalle de temps prédéterminé qui entoure l'occurrence de la perturbation de force de carrosserie en utilisant des intégrales par lesquelles les amplitudes du mouvement de lacet sont intégrées sur des fenêtres temporelles définies.

6. Système de commande de stabilité en lacet selon l'une quelconque des revendications 1 à 5, **caractérisé en ce que** le contrôleur est agencé de telle manière que l'influence de la partie de commande d'angle de lacet diminue progressivement vers la fin de l'intervalle de temps prédéterminé afin de rendre progressivement la commande totale à un conducteur dudit véhicule.

7. Système de commande de stabilité en lacet selon l'une quelconque des revendications 1 à 6, **caractérisé en ce que** le contrôleur est agencé pour introduire dans le système, pour réaliser des opérations de commande de stabilité en lacet du véhicule (6), un signal pour réaliser des opérations de commande de stabilité en lacet de perturbation de force de carrosserie pour éliminer l'angle de lacet du véhicule résultant de la perturbation de force de carrosserie et ramener le véhicule à un cap précédant la perturbation de force de carrosserie à travers la réalisation d'une intervention de freinage.

8. Système de commande de stabilité en lacet selon l'une quelconque des revendications précédentes, **caractérisé en ce que** le contrôleur est agencé pour mettre fin à l'intervalle de temps prédéterminé et à la commande d'angle de lacet lorsqu'un angle de dérapage (*β*) du véhicule passe sous la valeur de 40 degrés.

9. Véhicule automobile **caractérisé en ce qu'**il comprend un système de commande de stabilité en lacet selon l'une quelconque des revendications précédentes.

10. Procédé de commande d'un système de commande de stabilité en lacet pour véhicule comprenant : au moins une unité de détection de perturbation de force de carrosserie (7) ; et au moins un capteur d'amplitude du mouvement de lacet (5) agencé pour générer un signal (*ψ̇ᵥₑₕ*) représentant l'amplitude du mouvement de lacet du véhicule ; et un contrôleur réagissant à une erreur d'amplitude du mouvement de lacet et agencé pour fournir une entrée à un système pour réaliser des opérations de commande de stabilité en lacet du véhicule (6), **caractérisé en ce qu'**il comprend les étapes suivantes :
agencer le contrôleur pour : activer une partie de commande d'angle de lacet (1) du contrôleur, en réponse à une perturbation de force de carrosserie détectée, pour démarrer la réalisation de la commande de l'erreur d'angle de lacet (*ψₑᵣᵣ*) en réalisant une intégration de l'amplitude du mouvement de lacet, de degrés/seconde en degrés, où l'erreur d'angle de lacet (*ψₑᵣᵣ*) est obtenue en tant que différence entre une intégration d'une amplitude du mouvement de lacet mesurée (*ψ̇ᵥₑₕ*) et une intégration d'une amplitude du mouvement de lacet ciblée (*ψ̇_{ref}*) fournie à partir d'un modèle de référence d'amplitude du mouvement de lacet (4) dans lequel on entre un angle de volant de direction (*δ*), afin d'obtenir une correction de l'angle de lacet du véhicule résultant de la perturbation de force de carrosserie ; et
introduire dans le système, pour réaliser des opérations de commande de stabilité en lacet du véhicule (6), un signal pour réaliser des opérations de commande de stabilité en lacet de perturbation de force de carrosserie pour éliminer l'angle de lacet du véhicule résultant de la perturbation de force de carrosserie et ramener le véhicule à un cap précédant la perturbation de force de carrosserie.
